Europäisches Patentamt

European Patent Office

Office européen des brevets

(11) Veröffentlichungsnummer: **0 472 141 A2**

# EUROPÄISCHE PATENTANMELDUNG

(21) Anmeldenummer: **91113861.8**

(51) Int. Cl.⁵: **B62D 33/04**

(22) Anmeldetag: **19.08.91**

(30) Priorität: **20.08.90 DE 9012010 U**

(43) Veröffentlichungstag der Anmeldung:
**26.02.92 Patentblatt 92/09**

(84) Benannte Vertragsstaaten:
**AT BE CH DE DK ES FR GB GR IT LI LU NL SE**

(71) Anmelder: **Niedermaier, Josef**
**Sophienstrasse 136**
**W-7500 Karlsruhe 1(DE)**

(72) Erfinder: **Niedermaier, Josef**
**Sophienstrasse 136**
**W-7500 Karlsruhe 1(DE)**

(74) Vertreter: **Säger, Manfred, Dipl.-Ing.**
**Richard-Strauss-Strasse 56**
**W-8000 München 80(DE)**

(54) Fahrzeugaufbau für Gütertransportfahrzeug.

(57) Die Erfindung betrifft einen Fahrzeugaufbau für Gütertransportfahrzeug, wobei eine Ladefläche und ein Ladevolumen des Fahrzeugaufbaus einer wechselnden Ladung angepaßt werden kann, der dadurch gekennzeichnet ist, daß die Querschnittsgeometrie der Ladefläche und des Ladevolumens durch die Anordnung von Bordwandelementen (10a-10f') bestimmt ist, wobei die Bordwandelemente (10a-10f') senkrecht zum Querschnitt langgestreckte, im wesentlichen ebene und im Querschnitt rechteckförmige Platten sind, von denen jeweils zwei mittels feststellbaren Gelenken (20a-20f'), die sich senkrecht zum Querschnitt erstrecken, untereinander derart verbunden sind, daß sie eine um die Gelenke (20a-20f') schwenkbare, jedoch feststellbare Gliederkette bilden, und von denen eine innerste Platte (10a, 10a') mittels eines ebensolchen feststellbaren Gelenkes (20a, 20a') an einem Wand- oder oder Bodenteil (31, 32) befestigt ist und von denen eine äußerste Platte (10f, 10f') nur mit der nächst inneren Platte (10e, 10e') mittels eines feststellbaren Gelenkes (20f, 20f') verbunden ist.

Fig. 1

Die Erfindung betrifft einen Fahrzeugaufbau für ein Gütertransportfahrzeug, wobei eine Ladefläche und ein Ladevolumen des Fahrzeugaufbaus einer wechselnden Ladung angepasst werden können.

Es ist schon an Anordnungen gedacht worden, bei denen eine Anpassung der Ladefläche und des Ladevolumens an die Ladung dadurch vorgenommen werden konnte, daß entweder verschiedenartige Planenaufbauten verwendet wurden oder daß der Boden in Längsrichtung durch das Ausziehen von Rosten vergrößert wurde.

Nachteilig an solchen Anordnungen ist aber, daß planenartige Wände jeweils nur einen sehr ungenügenden Schutz gegen Witterungseinflüsse und Diebstahl bilden.

Der Erfindung liegt daher die Aufgabe zugrunde, einen Fahrzeugaufbau für ein Gütertransportfahrzeug derart weiterzubilden, daß die Seitenwände je nach Ladung eingestellt werden können, und daß sie gleichzeitig einen guten Witterungsschutz darstellen und zudem eine wirksame Barriere gegen möglichen Diebstahl darstellen.

Die der Erfindung zugrundeliegende Aufgabe wird bei einer Anordnung gemäß dem Oberbegriff des Hauptanspruchs durch dessen kennzeichnende Merkmale gelöst. Dabei ist die Querschnittsgeometrie der Ladefläche und des Ladevolumens durch die Anordnung von Bordwandelementen bestimmt. Die Bordwandelemente sind langgestreckte, ebene und im Querschnitt rechteckförmige Platten, die mittels feststellbaren Gelenken untereinander oder mit einem Wand- oder Bodenteil verbunden sind. Solche Bordwandelemente können aus Metall, Kunststoff, Holz oder in Verbundtechnik hergestellt sein und sind somit mechanisch gegenüber einer Plane deutlich widerstandsfähiger. Sie ermöglichen es auch, daß Bordwandelemente, die in eine horizontale Lage geklappt sind, als Boden- oder Zwischenbodenteile verwendet werden können.

Für die Gestaltung der Querschnittsgeometrie sind auch die zur Verbindung von Bordwandelementen bzw. von Bordwandelementen mit Wand- oder Bodenteilen angeordneten feststellbaren Gelenke von ausschlaggebender Bedeutung. Es sind daher erfindungsgemäß zwei verschiedene Grundarten feststellbarer Gelenke vorgesehen, einmal einfache feststellbare Gelenke und andererseits feststellbare Doppelgelenke. Mittels der einfachen feststellbaren Gelenke lassen sich die zu verbindenden Bordwandelemente bzw. ein Bordwandelement mit einem Wand oder Bodenteil derart befestigen, daß die Bordwandelemente bzw. Bordwandelemente und Wand- oder Bodenteile im Querschnitt einen Winkel von wenigen Grad bis zu 180 Grad einschließen. Eine Parallelstellung zweier benachbarter Bordwandelemente ist mit solchen einfachen feststellbaren Gelenken nicht möglich. Dazu sind erfindungsgemäß feststellbare Doppelgelenke vorgesehen, die es ermöglichen, daß auch benachbarte Platten völlig parallel zueinander geklappt werden können. Dabei ist es nicht erforderlich, daß ein Doppelgelenk auch zwei Gelenkachsen aufweist. Es ist auch möglich, ein Doppelgelenk dadurch zu realisieren, daß die Anlenkpunkte der Bordwandelemente an einem Gelenkkörper mit nur einer Gelenkachse entsprechend gewählt werden.

Zur Unterstützung der Handhabbarkeit der Bordwandelemente während Verstellvorgängen können Antriebseinheiten an den Gelenken vorhanden sein, die ein Verstellen der Bordwandelemente gegeneinander erleichtern. Solche Antriebseinheiten können elektrisch, pneumatisch, hydraulisch oder anders angetrieben sein.

Die Gelenke sind vorzugsweise solche gemäß des DE-GM 89 09 950.8.

Vorteilhafte Ausgestaltungen der Erfindung sind in den Unteransprüchen gekennzeichnet. Nachfolgend sind in der Zeichnung mit der entsprechend zugehörigen Beschreibung bevorzugte Ausführungsbeispiele skizziert. In der Zeichnung zeigt:

Fig. 1     einen erfindungsgemäßen Fahrzeugaufbau als Hochkoffer-Aufbau in einem Querschnitt

Fig. 2     einen erfindungsgemäßen Fahrzeugaufbau als Flachkoffer-Aufbau in einem Querschnitt

Fig. 3     einen erfindungsgemäßen Fahrzeugaufbau als Pritschen-Aufbau in einem Querschnitt

Fig. 4     einen erfindungsgemäßen Fahrzeugaufbau als Großraum-Aufbau mit einer Abschlußplane in einem Querschnitt

Fig. 5     eine Übersicht über die verschiedenen Ausbauformen des erfindungsgemäßen Fahrzeugaufbaus in einem Querschnitt

Fig. 6     einen erfindungsgemäßen Fahrzeugaufbau mit Doppelgelenken in einem Querschnitt

Fig. 7     einen erfindungsgemäßen Fahrzeugaufbau mit Doppelgelenken und parallel gestellten Bordwandelementen in einem Querschnitt

Fig. 8     einen erfindungsgemäßen Fahrzeugaufbau mit Ausziehelementen und einer Plane im Querschnitt

Fig. 9     einen Fahrzeugaufbau mit Ausziehelementen in einem zusammengeschobenen Zustand in einer Seitenansicht

Fig.10     einen Fahrzeugaufbau mit Ausziehelementen in einem ausgezogenen Zustand in einer Seitenansicht.

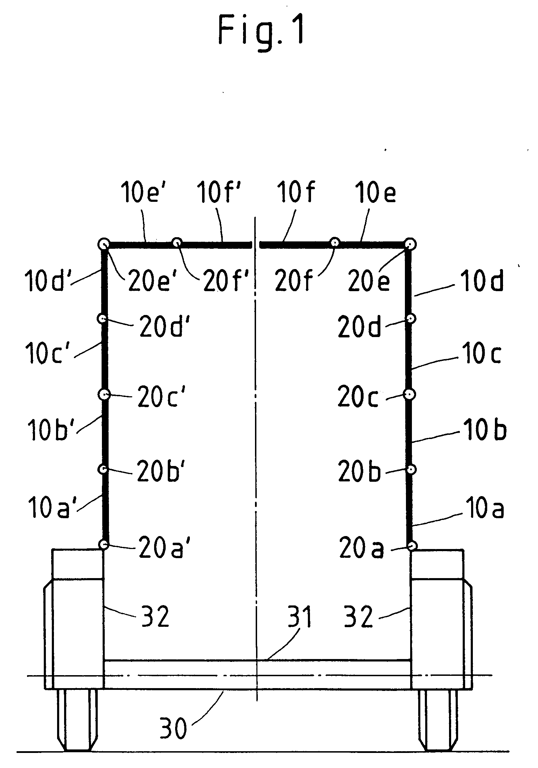

Bei dem in Fig. 1 gezeigten Fahrzeugaufbau ist auf einem Fahrzeugrahmen 30 ein Bodenteil 31 mit daran an den Seiten nach oben anschließenden Wandteilen 32 befestigt. An den oberen Enden der Wandteile 32 sind je ein feststellbares Gelenk angeordnet, die sich jeweils längs einer Fahrzeugachse, die in Längsrichtung des Fahrzeugs (Fahrtrichtung) liegt, erstrecken. An diesem feststellbaren Gelenk schließt sich ein Bordwandelement an, das im Querschnitt im wesentlichen rechteckförmig ist und sich als ebene Platte in einer Ebene erstreckt, in der auch das feststellbare Gelenk 20a angeordnet ist. Bei dem in Fig. 1 gezeigten Hochkofferaufbau erstreckt sich das Bordwandelement 10a in seiner durch die beiden an ihm befestigten feststellbaren Gelenken 20a, 20b bestimmten Quererstreckung im wesentlichen senkrecht zu dem Bodenteil 31 nach oben. Ein zweites Bordwandelement 20b ist an dem einen Ende in seiner Quererstreckung an dem feststellbaren Gelenk 20b befestigt und erstreckt sich in der gleichen Richtung wie das Bordwandelement 10a. Ebenso sind die Bordwandelemente 10c und 10d über die Gelenke 20c und 20d in Richtung der Quererstreckung des Bordwandelementes 10a jeweils über dem vorhergehenden Bordwandelement angeordnet. Ein Bordwandelement 10e ist über ein feststellbares Gelenk 20e mit dem Bordwandelement 10d verbunden und erstreckt sich in seiner Quererstreckung parallel zu dem Bodenteil 31 in Richtung auf die gegenüberliegenden Bordwandelemente. Ein letztes Bordwandelement 10f ist mit dem Bordwandelement 10e über ein feststellbares Gelenk 20f verbunden und erstreckt sich in seiner Quererstreckung in der gleichen Richtung wie das Bordwandelement 10e.

Spiegelsymmetrisch zu einer Ebene, die im wesentlichen senkrecht zu dem Bodenteil 31 in dessen im Querschnitt gesehenen Mitte längs der Fahrzeuglängserstreckung angeordnet ist, sind feststellbare Gelenke 20a' bis 20f' und Bordwandelemente 10a' bis 10f' spiegelsymmetrisch so angeordnet, daß sie die Bordwandelemente 10a bis 10f, die feststellbaren Gelenke 20a bis 20f, die Wandteile 32 und das Bodenteil 31 so ergänzen, daß ein im Querschnitt geschlossenes Rechteck entsteht. Die Wandelemente 20f und 20f' können zur Erhöhung der Stabilität mit einem Verbindungselement verbunden sein.

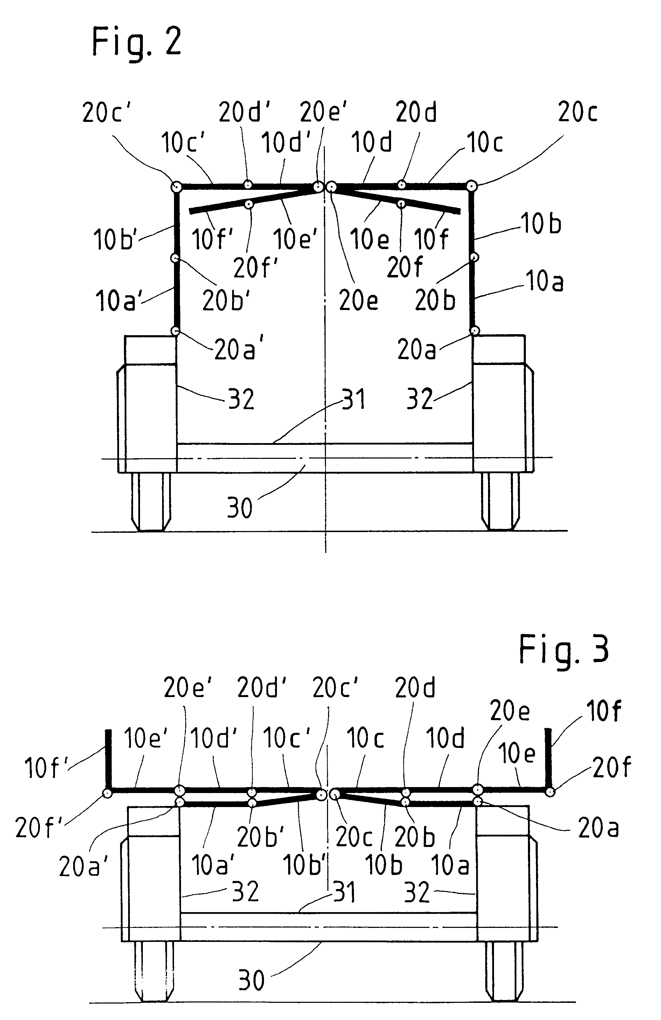

Der in Fig. 2 gezeigte Fahrzeugaufbau weist ein an dem Fahrzeugrahmen befestigtes Bodenteil 31 sowie zwei sich an den Seiten davon im wesentlichen senkrecht nach oben erstreckende Wandteile 32 auf. Der auch im weiteren zu einer Ebene, die sich in Fahrzeuglängserstreckung in der Bodenteilmitte senkrecht nach oben erstreckt, symmetrische Fahrzeugaufbau ist bestimmt durch ein Bordwandelement 10a, das über ein feststellbares Gelenk 20a an dem Wandteil 32 befestigt ist und sich in seiner Quererstreckung im wesentlichen senkrecht zu dem Bodenteil 31 nach oben erstreckt. Ein weiteres Bordwandelement 10b ist mittels eines feststellbaren Gelenkes 20b an dem Bordwandelement 10a befestigt und erstreckt sich gleich diesem im wesentlichen senkrecht zu dem Bodenteil 31 nach oben. Die Quererstreckung der Bordwandelemente 10c und 10d ist im wesentlichen parallel zu dem Bodenteil 31 und weist auf die zuvor schon beschriebene Symmetrieebene durch die Bodenteilmitte. Die Verbindung der Bordwandelemente mit dem jeweils vorhergehendem Bordwandelement besteht durch die feststellbaren Gelenke 20c und 20d. Ein Bordwandelement 10e ist mit dem Bordwandelement 10d über das feststellbare Gelenk 20e verbunden. Die Quererstreckung des Bordwandelementes 10e weist zu der Quererstreckung des Bordwandelementes 10d einen geringen Winkel auf, so daß das ebenfalls an dem Bordwandelement 10e befestigte feststellbare Gelenk 20f im wesentlichen neben dem feststellbaren Gelenk 20d zur Anlage kommt. Ein Bordwandelement 10f, das mit dem Bordwandelement 10e über das feststellbare Gelenk 0f verbunden ist, kann in seiner Quererstreckung entsprechend dem Bordwandelement 10e oder parallel zu dem Bodenteil 31 angeordnet sein. Im Querschnitt kann auch dieser Fahrzeugaufbau im wesentlichen durch ein Rechteck beschrieben werden.

Fig. 3 zeigt einen Fahrzeugaufbau, bei dem die Bordwandelemente so angeordnet sind, daß sich ein Pritschenaufbau ergibt. Ein Bodenteil 10a ist mit dem Wandteil 32 über ein feststellbares Gelenk 20a verbunden. Das zur Befestigung des Bordwandelementes 10b dienende feststellbare Gelenk 20b erstreckt sich in derselben Ebene, die sich parallel zum Bodenteil 31 durch das feststellbare Gelenk 20a erstreckt. In einer Ebene parallel zu dem Bodenteil 31 sind oberhalb der Ebene durch die feststellbaren Gelenke 20a, 20b, Gelenke 20c, 20d, 20f angeordnet, die die Bordwandelemente 10b, 10c, 10d, 10e, 10f verbinden. Das Bordwandelement 10b weist dabei einen zum Bodenteil 31 geringen Winkel auf und zeigt in seiner Quererstreckung, die durch die Gelenke 20b, 20c bestimmt ist, auf die Symmetrieebene des Fahrzeugs. Die Bordwandelemente 10c, 10d, 10e erstrecken sich in ihrer Quererstreckung parallel zu dem Bodenteil 31 und bilden den Boden des Pritschenaufbaues. Sie weisen von der Symmetrieebene nach außen. Das sich an das Bordwandelement 10e anschließende Bordwandelement 10f erstreckt sich in seiner Quererstreckung im wesentlichen senkrecht zu dem Bodenteil 31 nach oben. Dadurch stellt es die seitliche Begrenzung des Pritschenaufbaus dar.

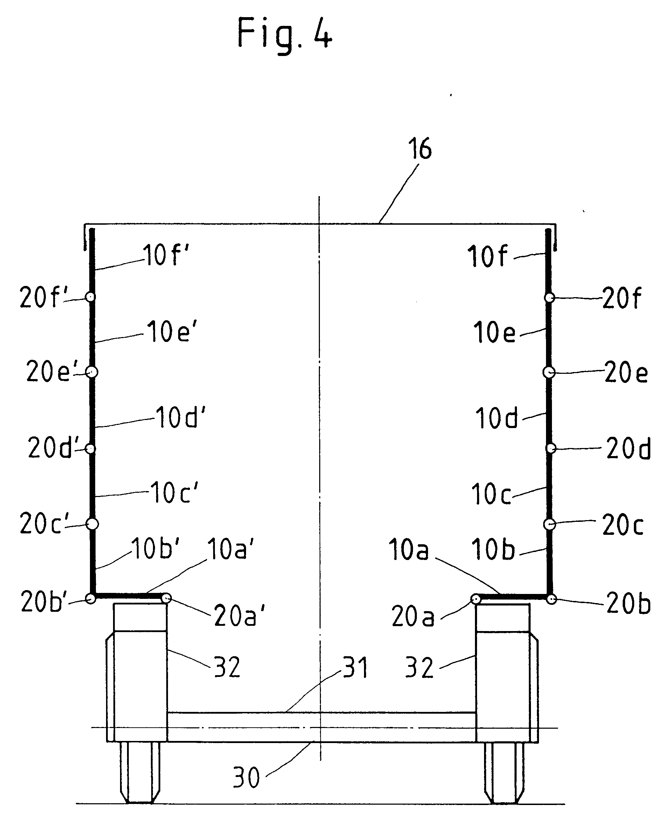

Figur 4 zeigt einen Fahrzeugaufbau als Großraumaufbau, wobei Bordwandelemente 10b, 10c, 10d, 10e, 10f in ihrer Quererstreckung in einer Linie angeordnet sind. Diese Linie erstreckt sich im wesentlichen senkrecht zu dem Bodenteil 31. Die genannten Bordwandelemente sind mittels der feststellbaren Gelenke 20c, 20d, 20e, 20f verbunden. Ein Bordwandelement 10a ist an einem Wandteil 32 mit einem feststellbaren Gelenk 20a verbunden. Seine Quererstreckung liegt in einer Ebene parallel zu dem Bodenteil 31 und das zur Verbindung der Wandelemente 10a, 10b dienende feststellbare Gelenk 20b ist in einer Ebene parallel zum Bodenteil 31 durch das feststellbare Gelenk 20a angeordnet, jedoch weiter als das Gelenk 20a von einer Symmetrieebene durch die Bodenteilmitte entfernt. Im übrigen ist dieser Aufbau spiegelsymmetrisch zu einer Ebene durch die Bodenteilmitte, die sich senkrecht zu dem Bodenteil in Fahrzeuglängserstreckung erstreckt. Die spiegelsymmetrisch zu der Symmetrieebene angeordneten Bordwandelemente 10f und 10f' sind mit einer Abschlußplane 16 verbunden. Die Abschlußplante 16 erstreckt sich im wesentlichen in einer zum Bodenteil 31 parallelen Ebene.

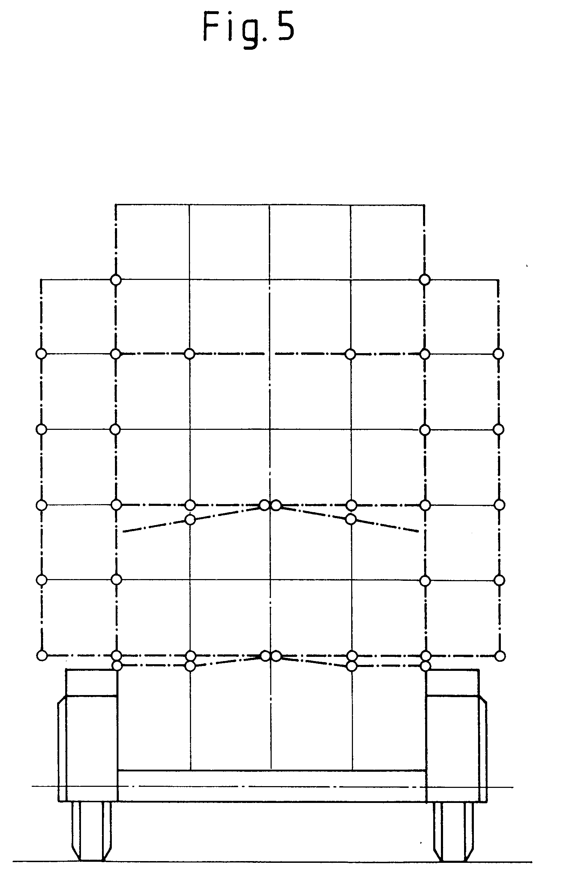

Fig. 5 zeigt eine Übersicht über mögliche Fahrzeugaufbauformen, die sich durch eine Anordnung von sechs Bordwandelementen und sechs feststellbaren Gelenken realisieren lassen.

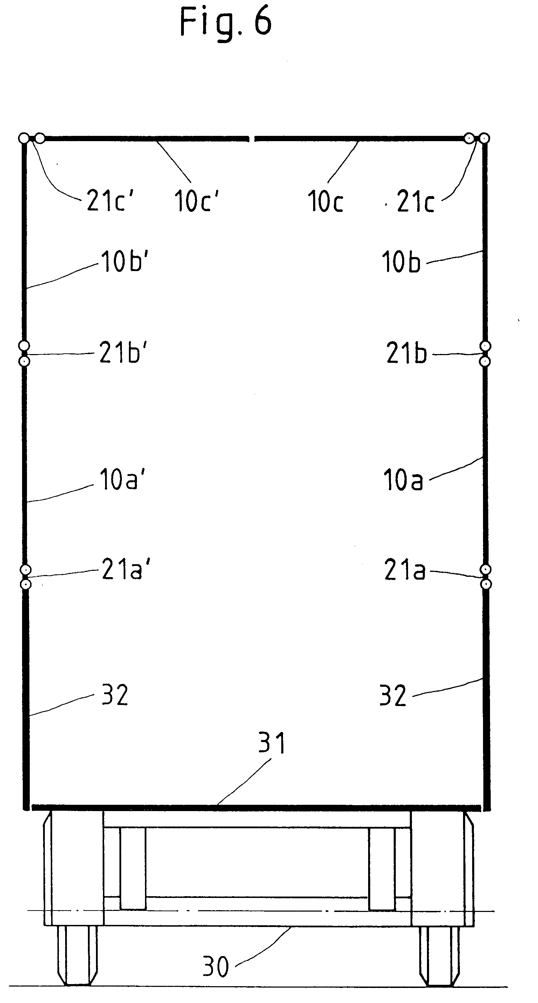

Fig. 6 zeigt einen Fahrzeugaufbau, bei dem feststellbare Doppelgelenke angeordnet sind. An einem Bodenteil 31 sind an dessen Seiten Wandteile 32 angeordnet, die sich in ihrer Längserstreckung längs der Längserstreckung des Fahrzeugs erstrecken und deren Quererstreckung im wesentlichen senkrecht zu dem Bodenteil 31 nach oben weist. An dem oberen Ende der Wandteile sind Doppelgelenke 21a, 21a' befestigt, an die sich in der gleichen Längs- und Quererstreckung wie bei den Wandteilen Bordwandelemente 10a, 10a' anschließen. Entsprechend den Bordwandelementen 10a, 10a', die an den Wandteilen 32 befestigt sind, sind Bordwandelemente 10b, 10b' mittels feststellbaren Doppelgelenken 21b, 21b' an den Bordwandelementen 10a, 10a' befestigt. Über feststellbare Doppelgelenke 21c, 21c' sind Bordwandelemente 10c, 10c' mit den Bordwandelementen 10b, 10b' verbunden, derart, daß sich die Bordwandelemente 10c, 10c' in ihrer Quererstreckung parallel zu dem Bodenteil 31 erstrecken und mit ihren den feststellbaren Doppelgelenken 21c 21c' gegenüberliegenden Längskanten im Bereich einer Symmetrieebene durch die Bodenteilmitte gegenüberliegen. Die Bordwandelemente 10c, 10c' können mittels eines Verbindungselementes so verbunden werden, daß sich ein im Querschnitt rechteckförmiger geschlossener Aufbau ergibt.

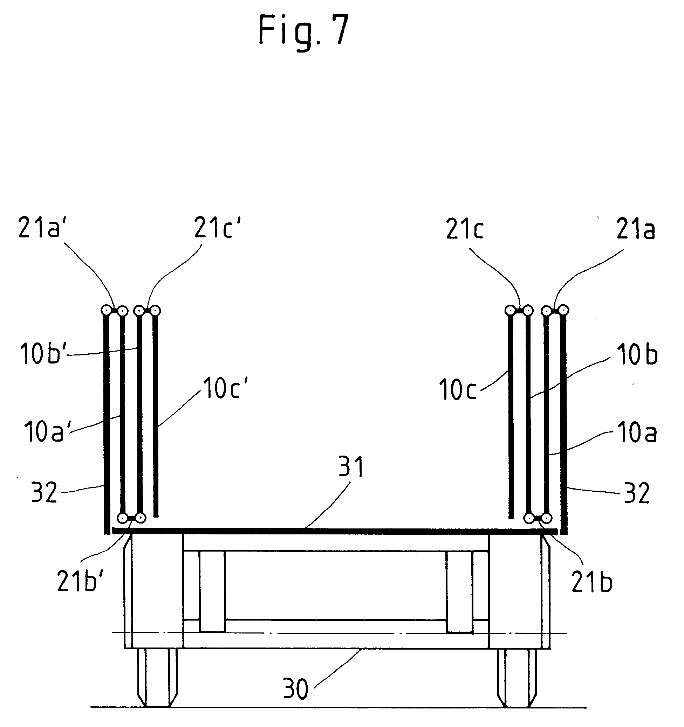

Fig. 7 zeigt einen Fahrzeugaufbau mit feststellbaren Doppelgelenken, wobei alle Bordwandelemente so geklappt sind, daß sie in parallelen Ebenen angeordnet sind, die sich parallel zu den Längserstreckungsebenen der Wandteile erstrecken, wobei diese Ebenen senkrecht zu einem Bodenteil 31 und in Längsrichtung des Fahrzeugs angeordnet sind. Diese Anordnung ist für Transportzwecke bzw. bei Leerfahrten besonders zweckmäßig.

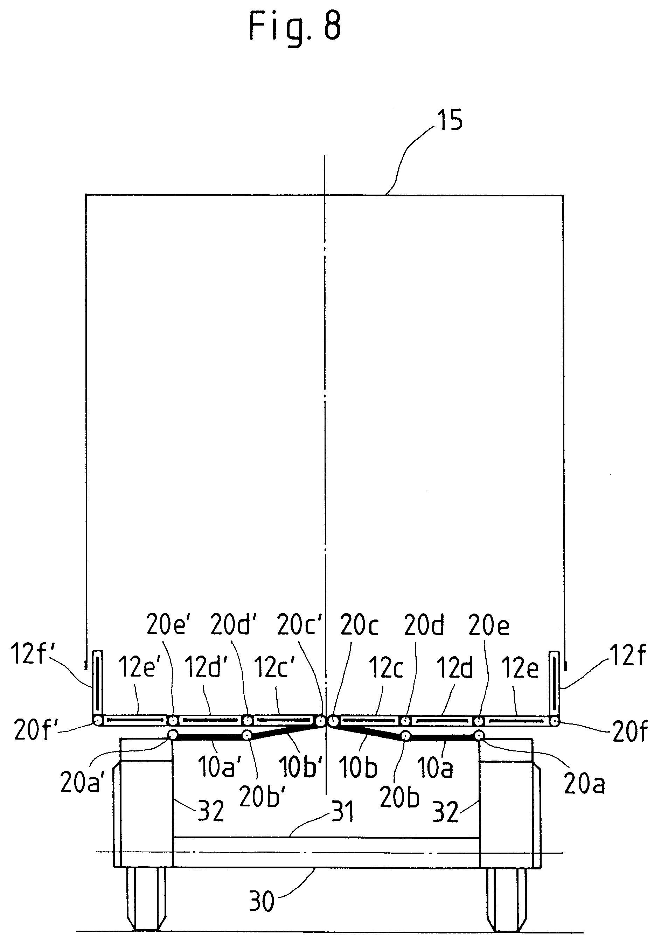

Fig. 8 zeigt einen Fahrzeugaufbau, dessen Bordwandelementeanordnung im wesentlichen der des Aufbaus gemäß Ausführungsbeispiels in Fig. 3 entspricht. Jedoch sind die Bordwandelemente 10c, 10d, 10e, 10f, 10c', 10d', 10e', 10f' durch Ausziehelemente 12c, 12d, 12e, 12f, 12c', 12d', 12e', 12f' ersetzt worden, die es ermöglichen, die Ladefläche in Längsrichtung des Fahrzeugs zu vergrößern. Außerdem ist oberhalb der Ausziehelemente 12f, 12f' eine Plane 15 mit einer entsprechenden Rahmenkonstruktion angeordnet, so daß ein mit einer Plane abgedeckter Pritschenaufbau entsteht. Die Plane 15 ist zeltartig ausgebildet und beispielsweise in den Ebenen, die die obere, vordere, hintere und die seitlichen Begrenzungen ds Fahrzeugaufbaus bilden, angeordnet.

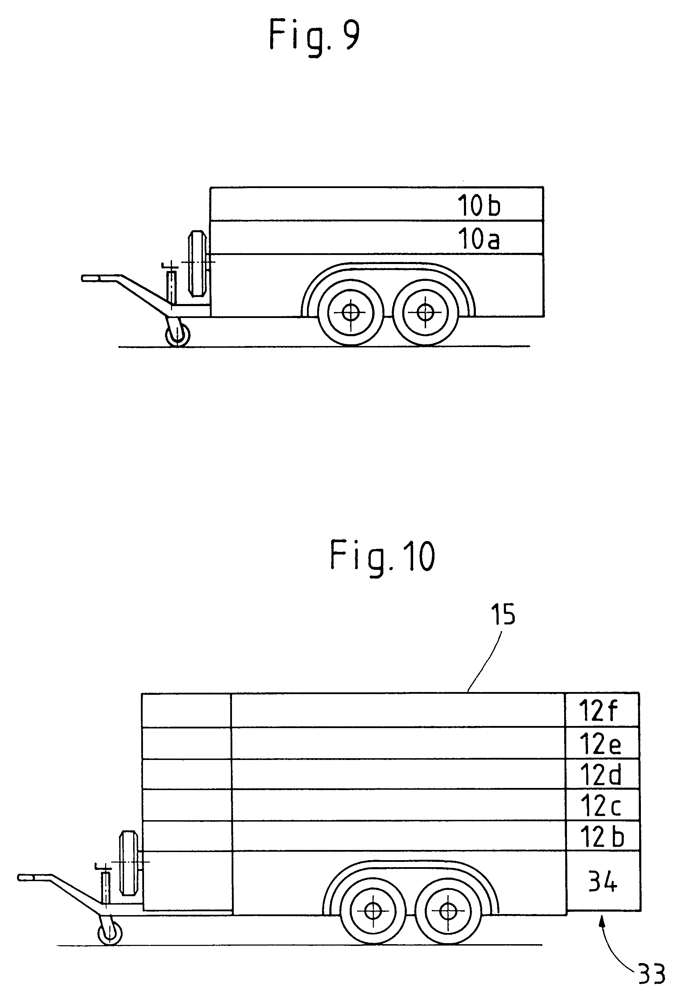

Fig. 9 zeigt einen Aufbau gemäß Figur 2 in einer Seitenansicht, wobei anstelle der Bordwandelemente auch Ausziehelemente angeordnet sein können.

Fig. 10 zeigt einen Fahrzeugaufbau in einer Seitenansicht, in dem Fall, in dem anstelle von Bordwandelementen 10a bis 10f' teilweise Ausziehelemente 12a bis 12f' angeordnet sind. Die Ausziehelemente, die in diesem Fall analog zu den Bordwandelementen in der Ausführungsform gemäß Fig. 1 angeordnet sind, werden in Fahrzeuglängsrichtung ausgezogen. Es wurde auch daran gedacht, das Bodenteil und die Wandteile als Ausziehbodenteil und Ausziehwandteile auszuführen, so daß ein vergrößerter Laderaum entsteht. Auch in diesem Fall werden das Ausziehbodenteil und die Ausziehwandteile in Fahrzeug-Längserstreckung ausgezogen.

**Patentansprüche**

1.   Fahrzeugaufbau für Gütertransportfahrzeug, wobei eine Ladefläche und ein Ladevolumen des Fahrzeugaufbaus einer wechselnden Ladung angepaßt werden können,
   **dadurch gekennzeichnet,**
   daß die Querschnittsgeometrie der Ladefläche und des Ladevolumens durch die Anordnung von Bordwandelementen (10a-10f') bestimmt ist, wobei die Bordwandelemente (10a-10f') senkrecht zum Querschnitt langgestreckte, im wesentlichen ebene und im Querschnitt rechteckförmige Platten sind, von denen jeweils zwei mittels feststellbaren Gelenken (20a-20f'), die sich senkrecht zum Querschnitt erstrecken, untereinander derart verbunden sind, daß sie eine um die Gelenke (20a-20f') schwenkbare, jedoch feststellbare Gliederkette bilden, und von denen eine innerste Platte (10a, 10a') mittels eines ebensolchen feststellbaren Gelenkes (20a, 20a') an einem Wand- oder Bodenteil (31, 32) befestigt ist und von denen eine äußerste Platte (10f, 10f') nur mit der nächst inneren Platte (10e, 10e') mittels eines feststellbaren Gelenkes (20f, 20f') verbunden ist.

2. Fahrzeugaufbau nach Anspruch 1,
**dadurch gekennzeichnet,**
daß der Fahrzeugaufbau ebenensymmetrisch zu einer Ebene ist, die sich in Fahrzeugmitte in Längsrichtung im wesentlichen senkrecht zu einer Standfläche des Fahrzeugs erstreckt.

3. Fahrzeugaufbau nach Anspruch 1 oder 2,
**dadurch gekennzeichnet,**
daß drei oder mehr Bordwandelemente (10a, 10f') je einen rechten und einen linken Fahrzeugaufbauteil darstellen.

4. Fahrzeugaufbau nach einem der Ansprüche 1 bis 3,
**dadurch gekennzeichnet,**
daß die feststellbaren Gelenke als Doppelgelenke (21a-21c') ausgeführt sind.

5. Fahrzeugaufbau nach einem der Ansprüche 1 bis 4,
**dadurch gekennzeichnet,**
daß die Bordwandelemente als Ausziehelemente (12a-12f') ausgebildet sind, die in Richtung der Gelenkerstreckung ausziehbar sind.

6. Fahrzeugaufbau nach einem der Anprüche 1 bis 5,
**dadurch gekennzeichnet,**
daß eine Front-, eine Heck- und/oder eine Dachöffnung mit vom Boden aufklappbaren Stirnwänden oder mit Fahrzeugplanen (16) oder Planen (15) verschlossen werden.

7. Fahrzeugaufbau nach einem der Ansprüche 1 bis 6,
**dadurch gekennzeichnet,**
daß die Drehbewegungen der Bordwandelemente (10a, 10f') um die feststellbaren Gelenke (20a, 20f') manuell oder mittels Antriebseinheiten bewirkt wird.

8. Fahrzeugaufbau nach Anspruch 7,
**dadurch gekennzeichnet,**
daß die Antriebseinheiten elektrisch, pneumatisch, hydraulisch oder anders angetrieben sind.

# Fig.1

# Fig. 2

# Fig. 3

## Fig. 4

# Fig.5

# Fig. 6

# Fig. 7

# Fig. 8

# Fig. 9

| 10 b |
| 10 a |

# Fig. 10

15

| 12 f |
| 12 e |
| 12 d |
| 12 c |
| 12 b |
| 34 |

33